Europäisches Patentamt

European Patent Office

Office européen des brevets

(19)

(11) Numéro de publication: **0 030 886**
**B1**

(12) **FASCICULE DE BREVET EUROPEEN**

(45) Date de publication du fascicule du brevet: **22.12.82**

(51) Int. Cl.³: **B 23 P 1/12**

(21) Numéro de dépôt: **80401739.0**

(22) Date de dépôt: **05.12.80**

(54) Tête de commande mécanique destinée au guidage du mouvement d'un outil.

(30) Priorité: **14.12.79 LU 81995**

(43) Date de publication de la demande:
**24.06.81 Bulletin 81/25**

(45) Mention de la délivrance du brevet:
**22.12.82 Bulletin 82/51**

(84) Etats contractants désignés:
**BE CH DE FR GB IT LI NL SE**

(56) Documents cités:
**DE - A - 2 644 888**
**GB - A - 813 071**

(73) Titulaire: **COMMUNAUTE EUROPEENNE DE L'ENERGIE ATOMIQUE (EURATOM)**
**Bâtiment Jean Monnet Plateau du Kirchberg Boîte Postale 1907**
**L-1019 Luxembourg (LU)**

(72) Inventeur: **Di Piazza, Learco**
**Via Cadorna 1**
**Ispra(Varese) (IT)**

(74) Mandataire: **Hoisnard, Jean-Claude et al,**
**Cabinet Beau de Lomenie 55, rue d'Amsterdam**
**F-75008 Paris (FR)**

Courier Press, Leamington Spa, England.

Tête de commande mécanique destinée au guidage du mouvement d'un outil

L'invention a pour objet une tête de commande mécanique, permettant de guider le mouvement d'un outil, notamment d'une électrode destinée à la génération par électroérosion d'une cavité dans une pièce métallique.

La demande de brevet allemand DE—A—2 644 888 décrit un procédé et un dispositif pour la réalisation par électroérosion de cavités de révolution dans des pièces métalliques massives; on utilise une électrode en forme de queue, laquelle, par l'intermédiaire d'une tête de commande, peut être déplacée selon les trois coordonnées de l'espace. Le guidage de l'électrode s'effectue au moyen d'une tige de commande à poussée axiale, articulée sur un porte-électrode.

Les recherches, qui ont abouti à la présente invention, ont montré que tant la précision que la vitesse du travail de l'outil pouvaient être grandement améliorées par les dispositions suivantes, prises en combinaison pour perfectionner la construction de la tête de commande:

— fixation de l'outil, notamment de l'électrode, sur un support se terminant par un pied en forme de spatule à bord effilé;

— fixation articulée et centrée du pied dans l'extrémité fourchue d'une tige de commande, présentant un épaulement à une distance librement choisie du pied en forme de spatule et pouvant être animée d'un mouvement de rotation autour de son axe et d'un mouvement de déplacement dans le sens axial;

— montage coaxial d'un prisme creux de guidage dont la face en bout, (face de guidage), au contact du bord effilé du pied de support en forme de spatule, est coupée en biais, alors que la face opposée repose sur l'épaulement de la tige de commande.

Grâce à la construction de la tête de commande selon l'invention, un mouvement relatif de rotation de la tige de commande par rapport au prisme de guidage provoque un glissement rotationnel du bord effilé du pied en forme de spatule sur la face de guidage.

Le mouvement de l'outil qui en résulte, dépend de celui des deux éléments -prisme de guidage et prolongement de la tige de commande au-delà du creux dudit prisme de guidage- qui est maintenu immobile pendant le mouvement relatif. Lorsqu'on maintient immobile la tige de commande et qu'on tourne en rotation le prisme et donc la face de guidage, l'outil décrit un mouvement oscillant dans un plan passant par l'axe de la tige de commande, le degré d'oscillation étant déterminé par l'inclinaison de la face de guidage (mode de travail I). Si, par contre, on immobilise le prisme de guidage, et donc la face inclinée en bout de ce prisme, et qu'on entraîne en rotation la tige de commande, l'extrémité de l'outil décrit un mouvement circulaire autour de la base d'un cône, dont le sommet est situé à l'articulation du pied en forme de spatule et dont la génératrice coïncide, dans sa position la plus raide, avec l'axe de symétrie de la tige de commande, et dans sa position à inclinaison maximale, avec une normale à la face de guidage (mode de travail II). Du point de vue qualitatif, ce mouvement reste identiquement le même quelle que soit l'orientation de la face de guidage dans l'espace.

L'explication qui précède, des deux mouvements extrêmes de l'outil, réalisables en principe avec le dispositif de l'invention, n'a qu'un but illustratif de l'action de la tête de commande et ne signifie nullement que ces mouvements soient tous exécutés lors de la mise en oeuvre d'un outil dont le mouvement est guidé par ladite tête de commande.

A titre d'exemple, on peut signaler que pour la génération par électroérosion de cavités de révolution dans une pièce métallique, on applique le mode de travail II avec la particularité que la vitesse relative de rotation entre la pièce et l'outil est élevée par rapport à la vitesse d'avance de l'électrode.

L'invention sera maintenant illustrée par référence aux dessins joints qui montrent un exemple d'exécution de la tête de commande selon l'invention, l'outil étant une électrode, et qui expliquent schématiquement les modes de travail sus-mentionnés. Sur ces dessins:

— la figure 1 est une vue latérale d'une tête de commande et montre l'électrode dans l'inclinaison maximale du mode de travail II;

— la figure 2 montre une autre vue latérale qui correspond à une rotation de 90° par rapport à la figure 1, et dans laquelle l'électrode occupe la position la plus raide du mode de travail II;

— la figure 3 représente plus en détail la fixation articulée du pied en forme de spatule dans l'extrémité fourchue de la tige de commande;

— la figure 4 indique en vue latérale, les positions extrêmes prises par l'outil dans le mode de travail I;

— la figure 5 est une vue du dessus de la représentation schématique selon la figure 4;

— la figure 6 montre en vue latérale le mouvement de l'outil dans le mode de travail II, la position de la face de guidage correspondant à celle de la figure 1;

— la figure 7 représente schématiquement en vue de dessus le mouvement selon la figure 6.

Sur les dessins 1 et 2, l'outil 1 est une électrode en graphite ayant la forme d'une quille. Le prisme de guidage porte le repère 2, la face de guidage, le repère 4. Une partie de la tige de commande 3 traverse coaxialement le prisme 2 dans l'alésage 10. Le prisme 2 repose sur l'épaulement annulaire 5 de la tige de

2

commande 3.

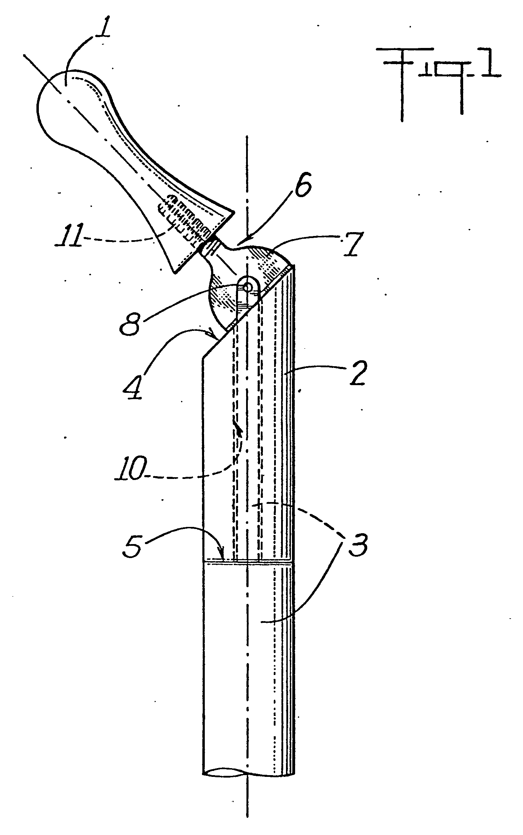

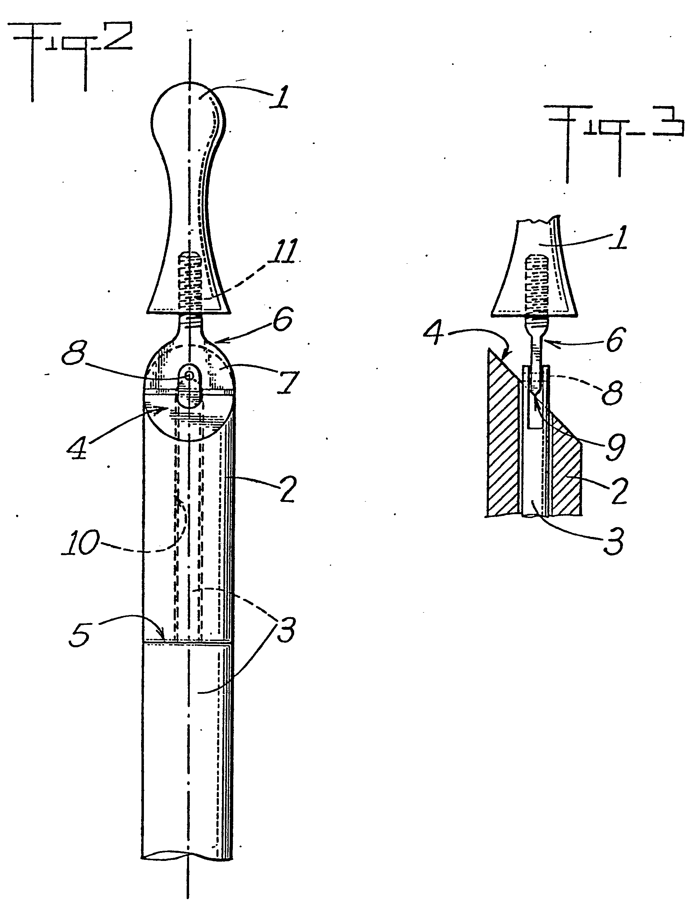

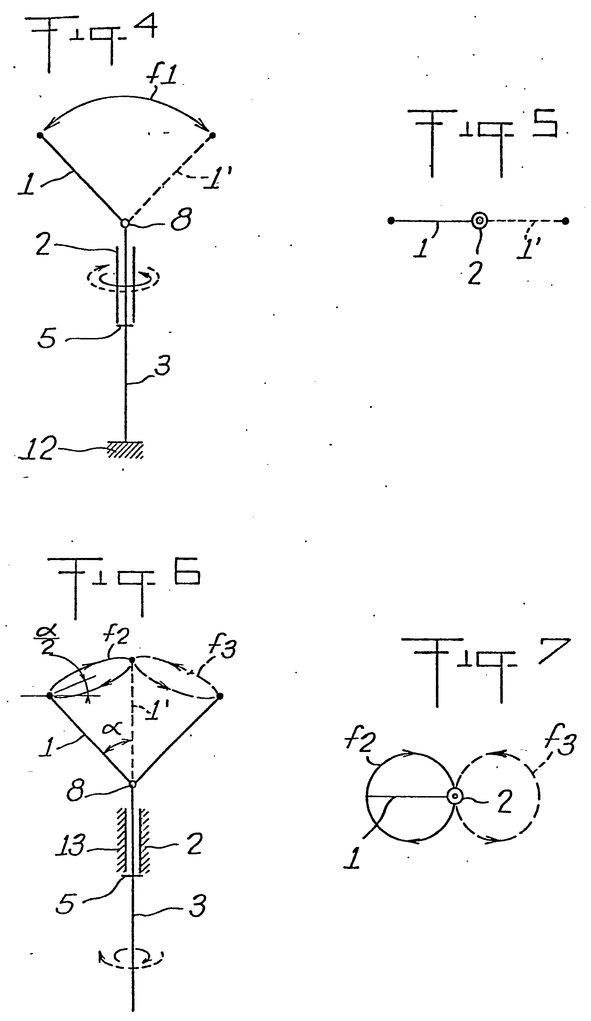

Le support 6 de l'outil comprend une tige filetée 11, engagée dans l'outil, et un pied 7 en forme de spatule. Le pied 7 est fixé dans l'extrémité fourchue de la tige 3 au moyen d'un axe d'articulation 8. Ainsi qu'il ressort de la figure 3, la spatule comporte un bord effilé 9 par l'intermédiaire duquel le pied repose à frottement sur la face de guidage 4. Dans le mode de travail I (figures 4 et 5), la tige de commande 3 est immobilisée, ce qui est suggéré par les hachures d'ancrage 12. Lorsqu'on donne au prisme de guidage un mouvement de rotation dans l'un ou l'autre sens, l'électrode décrit un mouvement d'oscillation f1 entre les positions 1 et 1'.

A l'aide de ce mode de travail, deux types de cavités peuvent être réalisées par électroérosion dans une pièce massive. Si la pièce est fixe, l'approche et la pénétration de l'électrode oscillante génère dans cette pièce une rainure en arc de cercle ou, si la pénétration continue, en segment de cercle. On peut également réaliser une cavité en forme de cône à base bombée si l'on introduit l'électrode, en position alignée avec la tige de commande, dans un creux pratiqué dans la pièce à travailler, ladite pièce étant mise en rotation. Le prisme de guidage ou la barre de commande sont alors animés d'un mouvement de rotation lent.

Pour que l'extrémité de l'électrode puisse parcourir la trajectoire f1, allant de la position 1 vers la position 1', on fait tourner le prisme de guidage de 180°, ainsi qu'il ressort directement de la figure 1. En effet, l'électrode occupe alors une position symétrique de celle qui est représentée en étant inclinée vers la droite. Il y a lieu de remarquer que la forme des électrodes est choisie en fonction des formes que l'on désire donner aux rainures ou cavités générées.

Dans le cas du mode de travail II (figures 6, 7), le prisme de guidage 2 est immobilisé, ce qui est suggéré par les hachures d'ancrage 13. Si l'on tourne la tige de guidage dans l'un ou l'autre sens, l'extrémité de l'électrode suit le mouvement circulaire f2 dans un plan incliné par rapport à celui de la face de guidage. Dans le cas de la figure 1, l'inclinaison de la face de guidage $\alpha = 45°$. L'inclinaison de la trajectoire circulaire f2 sur l'horizontale est alors de 22,5°. Des différentes positions inclinées que l'électrode occupe en parcourant la trajectoire f2, seules les positions 1 et 1' sont représentées.

Le mode de travail II permet également de générer par électroérosion deux types de cavités dans une pièce métallique massive. Cependant ces deux types ne se distinguent l'un de l'autre que par les positions des cavités. Si la pièce est immobilisée, on peut obtenir un évidement en forme de cône, incliné par rapport à l'axe de la tige de commande. Si, par contre, la pièce à travailler est entraînée en rotation, on peut réaliser une cavité conique à fond bombé en introduisant d'abord l'électrode, alignée avec la tige de commande, dans un creux pratiqué dans ladite pièce à travailler. Pour ce faire, le prisme de guidage ou la barre de commande sont tournés lentement en rotation autour de leur axe. Pour générer la cavité toute entière, il suffit que le prisme de guidage, ou la barre de commande, tourne de 90° ainsi qu'il ressort d'une comparaison entre les figures 1 et 2 qui montrent les positions de pied en forme de spatule avant et après une rotation de 90° du prisme de guidage.

Le mode de travail décrit en dernier trouve, par exemple, une application importante dans la réalisation de cavités dans des têtes de soupapes de manoeuvre de moteurs à explosion.

L'utilisation de la tête de commande selon l'invention, a permis de réduire la durée de réalisation d'une cavité à une fraction, par exemple, un tiers, du temps requis par la méthode selon la publication antérieure DE—A—2 644 888. Un avantage supplémentaire est le guidage précis et bien contrôlé réalisable à l'aide du bord effilé du pied en forme de spatule.

Un autre avantage résulte du fait que, dans l'usinage de type II, l'électrode ne se consomme plus suivant une seule génératrice; en effet, il résulte des figures 6 et 7 que l'électrode peut être utilisée en régime d'ébauche (cas de la trajectoire f2, avec rotation de 0 à 90° et usure suivant génératrice repérée (1). En continuant la rotation de 90° à 180°, cette même électrode est ramenée à sa position de départ, puis par rotation de 180° à 270°, l'électrode peut être utilisée suivant f3 en régime de finition, l'électrode présentant alors au contact avec la pièce une génératrice non usée (génératrice opposée à celle d'ébauche). Ce dernier avantage garantit la précision d'usinage suivant le profil initialement prévu.

Les moyens utilisés pour commander et régler le mouvement des différents organes de la tête de commande selon l'invention, sont classiques et ne font pas partie de l'invention. La régulation se fait, de préférence, par des moyens électroniques, la grandeur réglée étant, par exemple, une grandeur électrique analogique de la distance appropriée entre l'électrode et la pièce à travailler par électroérosion. D'autre part, la barre de commande peut être avantageusement tubulaire afin de permettre la circulation du diélectrique jusqu'à la cavité usinée.

Pour réaliser différentes formes de cavités, on peut adapter la forme des électrodes, l'inclinaison de la face de guidage et/ou d'autres facteurs d'influence tels que la configuration du bord effilé du pied en forme de spatule. De telles modifications sont à la portée de l'homme de métier et ne sortent pas du cadre de l'invention.

**Revendication**

Tête de commande mécanique destinée au guidage du mouvement d'un outil et notamment d'une électrode (4) pour électroérosion au moyen d'une tige de commande (3) à extrémité fourchue, caractérisée en ce qu'elle comprend en combination les éléments suivants:

(a) une fixation de l'outil sur un support (6) se terminant par un pied en forme de spatule à bord effilé (9);

b) une fixation articulée (8) et centrée du pied (7) dans l'extrémité fourchue de la tige de commande (3), ladite tige présentant un épaulement annulaire (5) à une distance librement choisie du pied en forme de spatule et pouvant tourner en rotation autour de son axe et se déplacer dans le sens axial;

c) un montage coaxial d'un prisme creux de guidage (2) dont la face de guidage, au contact du bord effilé (9) du pied en forme de spatule, est coupée en biais, alors que la face opposée du prisme, perpendiculaire à l'axe du prisme, repose sur l'épaulement (5) de la tige de commande (3).

## Claim

A mechanical control head for guiding the movement of a tool and particularly an electrode (4) for electroerosion by means of a control rod (3) with forked end, characterized in that it comprises the combination of the following elements:

a) a connection of the tool on a support (6) terminating in a foot in the form of a spatula with tapered edge (9);

b) an articulated (8), centred connection of the foot (7) in the forked end of the control rod (3), said rod presenting an annular shoulder (5) at a distance freely chosen, from the spatula-shaped foot and adapted to rotate about its axis and move in the axial direction;

c) a coaxial assembly of a hollow guide prism (2) whose guide face, in contact with the tapered edge (9) of the spatula-shaped foot, is cut obliquely, whilst the opposite face of the prism, perpendicular to the axis of the prism rests on the shoulder (5) of the control rod (3).

## Patentanspruch

Mechanischer Steuerkopf zur Führung der Bewegung eines Werkzeugs, insbesondere einer Elektrode (4) für Elektroerosion mittels einer Steuerstange (3) mit gabelförmigem Ende, dadurch gekennzeichnet, daß er die folgenden Elemente in Kombination umfaßt:

a) eine Fixierung des Werkzeugs auf einer Stütze (6), die in einem spachtelförmigen Fuß mit scharfer Kante (9) endet;

b) eine zentrisch angeordnete Anlenkfixierung (8) des Fußes (7) im gabelförmigen Ende der Steuerstange (3), wobei die Stange eine ringförmige Schulter (5) in einem beliebig gewählten Abstand vom spachtelförmigen Fuß aufweist und um ihre Achse drehbar und in axialer Richtung verschiebbar ist;

c) eine koaxiale Einfügung eines hohlen Führungsprismas (2), dessen mit der scharfen Kante (9) des spachtelförmigen Fußes in Kontakt befindliche Führungsfläche schräg geschnitten ist, wogegen die gegenüberliegende, senkrecht zur Prismenachse stehende Fläche des Prismas auf der Schulter (5) der Steuerstange (3) ruht.

Fig.1

Fig 2

Fig 3

Fig. 4

Fig. 5

Fig. 6

Fig. 7